# EUROPEAN PATENT SPECIFICATION

(11) **EP 1 405 004 B1**
(45) Date of publication and mention of the grant of the patent: **31.08.2005**
(21) Application number: 02741183.4
(22) Date of filing: 25.06.2002
(51) Int. Cl.: F16L 59/06

(54) **SYSTEM FOR THERMALLY INSULATING TUBULAR BODIES**
SYSTEM FÜR DIE WÄRMEISOLIERUNG ROHRFÖRMIGER KÖRPER
SYSTEME D'ISOLATION THERMIQUE DE CORPS TUBULAIRES

(30) Priority: 09.07.2001 IT MI20011458
(43) Date of publication of application: 07.04.2004
(73) Proprietor: SAES GETTERS S.p.A., 20020 Lainate (Milano) (IT)
(72) Inventor: MANINI, Paolo, I-20010 Arluno (IT); DI GREGORIO, Pierattilio, I-67039 Sulmona (IT)
(74) Representative: Adorno, Silvano
(86) International application number: PCT/IT2002/000417
(87) International publication number: WO 2003/006871

(56) References cited:
- WO-A-01/38779
- WO-A-97/37166
- US-A- 5 843 353
- US-A- 6 110 310

## Description

The present invention relates to a system for thermally insulating tubular bodies, such as for example pipes for transporting cold or hot fluids see, for instance, US-A-6 110 310.

Many kinds of thermally insulating systems are known. In particular it is known that in order to form the lagging of a body of any shape it is possible to provide such a body with a double outer wall, in the interspace of which a material having low thermal conductivity, such as mineral wool, glass wool or polyurethane, can be placed.

However, the insulating properties of such materials are not very high, and in some cases it is necessary to use great thicknesses thereof for maintaining constant the internal temperature of the body. This is for instance the case of undersea pipes for transporting crude oil, that are generally formed by two coaxial tubes of stainless steel in which the oil flows in inner tube, while the outer one acts as a protection. In order to allow long-distance piping of oil while avoiding that its viscosity increases, it must be maintained at the lifting temperature comprised between about 60 and 90 °C, and therefore in the interspace between the two tubes a great amount of insulating material is to be inserted. This requires the use of an outer big-sized tube, and consequently the overall volume and weight of the pipe increase notably, since the amount of steel required for the outer tube rises quickly as a function of the diameter thereof. Also the costs for producing the pipe increase proportionally.

Alternatively, the interspace between the coaxial tubes may be evacuated so as to exploit the low thermal conductivity of vacuum with a view to achieve the insulation of the pipe. In this case however the construction of the pipe becomes more complex, and it is necessary that in the same interspace is placed a getter material able to absorb the gases that during time may outgas from the steel forming both tubes.

There are further well known evacuated insulating panels formed by a envelope wherein a filling material under vacuum is present. The envelope serves to prevent (or reduce to the highest degree) the entrance of atmospheric gases into the panel, so as to maintain a vacuum level that is compatible with the thermal insulation degree required by the application. To this end, the envelope is made of so-called "barrier" foils, characterized by a gas permeability reduced to the highest degree, that can be formed by a single component, but more usually are multilayers of different components. In the case of multilayers, the "barrier" effect is given by one of the component layers, whereas the other layers have generally the function of mechanically supporting and protecting the barrier layer. The filling material on the contrary has mainly the function of maintaining the opposed faces of the envelope spaced out when a vacuum is made in the panel, and must have a porous or uneven internal structure so that the porosities or spaces thereof may be evacuated to perform the insulating function. This material can be inorganic, such as for example silica powder, glass fibers, aerogels, diatomaceous earth, etc.; or polymeric, such as polyurethane or polystyrene rigid foams, both in the form of boards and powders.

Thanks to their very low thermal conductivity, very thin evacuated panels are adequate to carry out an effective insulation of oil ducts. Therefore it is possible to reduce the internal dimensions of interspace of such ducts, thus overcoming the above named problems.

For example, the publication PCT No. WO01/38779 describes an evacuated insulating panel having tubular shape and suitable to be placed around an undersea conduit for oil piping.

However, a first inconvenience of such panels is the brittleness of their envelope that can easily crack and may thus allow the passage of gases into the panel. Such a passage obviously jeopardizes the insulating properties of the panel and, in the case of undersea pipelines, it causes an irreparable damage because the replacement of the damaged panel cannot be effected.

Another drawback of evacuated panels lies in that they do not provide an adequate insulation to tubular bodies. As a matter of fact, they have generally a plane shape and must therefore be bent up to set side by side two opposed edges, in order to fit them to the tubular form of the inner interspace of oil ducts.

However, an evacuated panel curved in this manner does not allow to perfectly insulate the inner tube of the pipe, and in particular the zone corresponding to the edges that are set aside may become poorly insulated. In that zone in particular it can occur a cooling of inner tube and consequently also the oil flowing in inner tube get cold, thus thickening and causing a partial obstruction in the pipe.

The object of the present invention is therefore to provide an insulating system for tubular bodies, which is free of such inconveniences. Said object is achieved by means of an insulating system whose main characteristics are specified in the first claim, and further features are specified in the subsequent claims.

The insulating system according to the present invention can be easily constructed and comprises at least two thin evacuated panels that are mutually superimposed and placed so as to perfectly insulate a tubular body, with at least one of the evacuated panels of the insulating system comprising as a filling material a polymeric material, whereas at least another panel uses as filling material a powder of an inert material having a mean particle size of less than 100 nanometers (nm) and preferably comprised between about 2 and 20 nm. Thanks to the coupling of two filling materials having different characteristics, the insulating system according to such an embodiment of the invention is particularly suited to insulate a tubular body having a temperature very different from that of the surrounding environment, for instance a pipeline wherein an oil flows at the lifting temperature and which is plunged in water on a sea depth.

The panels comprising said inert powders withstand actually the high temperatures better than the ones comprising polymeric filling materials and can thus be put as a protection of these latter, whose insulating characteristics would change in an unpredictable way if exposed for a long time to high temperatures, with marked aging phenomena.

In addition, the panels based on inert powders undergo less changes in thermal insulating characteristics in case of cracks. As a matter of fact, the thermal conductivity of panels comprising inert powders changes only slightly upon entrance of air, thus remaining below about 8 mW/m·K for internal pressures up to some tens of mbars, and reaching a maximum value of about 20 mW/m·K in the case the internal pressure reaches 1 bar. On the contrary, in panels based on polymeric foams the thermal conductivity rises quickly from about 10 mW/m·K when the internal pressure is about 1 mbar, up to about 35 mW/m·K at atmospheric pressure. For this reason, while for the first panels it is necessary to use envelopes containing aluminum foils, for the second ones the more resistant envelopes of plastic multilayer may be used.

Further advantages and features of the insulating system according to the present invention will be evident to those skilled in the art upon reading the following detailed description of an embodiment thereof with reference to the attached drawings, in which:
- Figure 1 shows a cross-sectional view of a double-walled duct, in the interspace of which the insulating system according to said embodiment of the invention is inserted; and
- Figure 2 shows a longitudinal section view of the duct in Fig. 1.

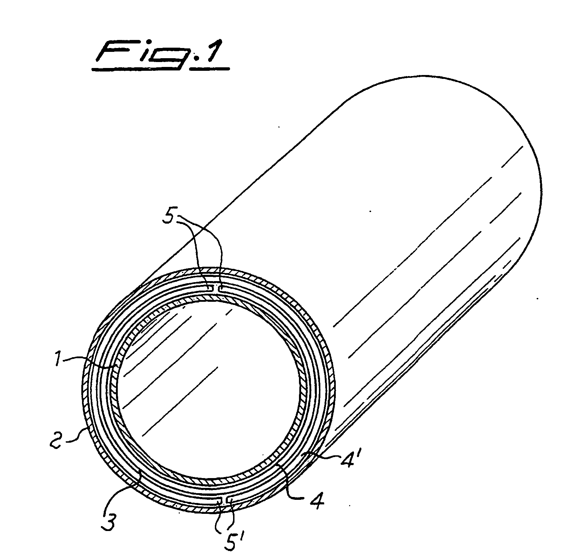

With reference to figure 1, there is shown that the pipe wherein the insulating system according to the present invention is installed, is formed in a known manner by an inner tube 1 and an outer tube 2, being coaxial with inner tube 1 and having such a diameter that between said tubes an interspace 3 is present. Inside tube 1 the fluid to be insulated, for example oil, is let flow. The tubes 1 and 2 can be made of any suitable material, for example stainless steel in the case of undersea pipes for transporting oil.

In interspace 3 two evacuated panels 4 and 4' are disposed, each of which is rolled up so as to set side by side its two opposed edges 5 and 5' that are parallel to the rolling axis. The other two edges, that are perpendicular with respect to the rolling axis, form thus the end edges 6 and 6' of the rolled panels 4 and 4'. In such a manner, the evacuated panels 4 and 4' take a tubular arrangement and fit with the tubular form of the interspace. In case, said opposed edges 5 and 5' may be mutually sealed by any known means, for instance by hot sealing.

The two so rolled panels 4 and 4' become reciprocally inserted, in such a way that the edges 5 of panel 4 are staggered with respect to edges 5' of panel 4', and are preferably arranged in a position diametrically opposed with respect to said edges 5'.

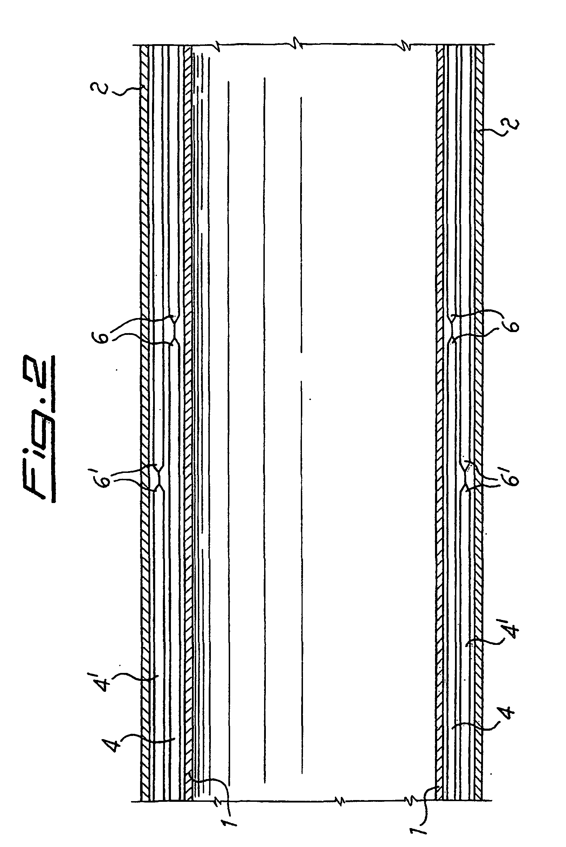

According to a preferred embodiment of the present invention, also the end edges 6 of rolled panel 4 are staggered with respect to end edges 6' of rolled panel 4', as it appears from figure 2.

Such a staggered arrangement allows to obtain a substantially even thermal insulation, as the heat passage between the outer environment and the body to be insulated, that could occur through the poorly insulating zone of the edges of a panel, is prevented thanks to the presence of the other panel. In addition, if one of the two panels cracks during or following the construction of the pipe, the heat retaining quality is assured by the presence of the other panel.

The insulating system may also comprise more than two panels, for example three or four. Said panels can comprise a conventional envelope, for instance of the multilayer type, and an inorganic or polymeric, discontinuous or porous, filling material

According to the invention, the evacuated panels are of two types: at least a panel comprises a polymeric, for example polyurethanic, filling material, whereas at least another panel uses as the filling material an inert powder having mean particle dimensions below 100 nm and preferably between about 2 and 20 nm. Said powder is preferably silica. A silica having the desired dimensional characteristics can be obtained by precipitation from alkali solutions of silicates; this kind of silica is produced and sold for instance by the English company Microtherm International Ltd., under the names Microtherm G, Microtherm Super G or Waterproof Microtherm Super G. Alternatively, it is possible to use pyrogenic silica, a form of silica obtained by burning in a special chamber SiCl₄ with oxygen, according to the reaction: ${\text{SiCl}}_{\text{4}} {\text{+ O}}_{\text{2}} {\text{→ SiO}}_{\text{2}} {\text{+ 2Cl}}_{\text{2}}$

The silica produced in this reaction is in the form of particles having dimensions comprised between few nanometers and some tens of nanometers, which can be possibly bound to form particles having larger dimensions. A pyrogenic silica is produced and sold for example by the US company CABOT Corp. under the name Nanogel® or by the German company Wacker GmbH.

The silica can be possibly mixed with mineral fibers, for example glass fibers, so that it can be easily consolidated in order to prepare blocks with a thickness of even few millimeters, which blocks can be enveloped, evacuated and subsequently rolled with relative ease.

Since such inert materials generally well withstand high temperatures, the panels containing them are arranged in contact with the one, of the surrounding environment and body to be insulated, having the highest temperature. Therefore, in the case of ducts for piping oil, these panels are favorably arranged directly in contact with the inner tube 1 so as to protect the panel comprising the polymeric filling material from possible damages due to a protracted exposure to the high temperatures of crude oil flowing in inner tube 1. In the case of figure 1, panel 4 comprises preferably an inert filling material, while panel 4' is based on a polymeric filling material.

Even though the present invention relates to the insulation of a conduit for piping oil, the insulating system according to the present invention can be used to insulate any other body having tubular shape, for example a boiler or a pipe for transporting a cryogenic fluid such as liquid nitrogen or oxygen.

## Claims

1. A heat insulating system for tubular bodies, comprising at least two evacuated panels (4, 4'), each of which is essentially formed by an evacuated envelope made with barrier foils, inside which there is contained an inorganic or polymeric, discontinuous or porous filling material, and is rolled up on itself to the extent that two of its opposed edges (5, 5') which are parallel to the rolling axis are set aside, and the other two edges that are perpendicular to the rolling axis form the end edges (6, 6') of the rolled evacuated panel, said rolled evacuated panels (4, 4') being arranged coaxially with the opposed edges (5) of an evacuated panel (4) staggered with respect to the opposed edges (5') of another evacuated panel (4'), **characterized in that** at least one of said evacuated panels (4,4') comprises a polymeric filling material and at least another evacuated panel (4,4') uses as filling material a powder of an inert material having mean particle dimensions below 100 nanometers..

2. The heat insulating system according to claim 1, **characterized in that** said polymeric filling material is polyurethane.

3. The heat insulating system according to claim 1, **characterized in that** said powder of inert material has mean particle dimensions comprised between about 2 and 20 nanometers.

4. The heat insulating system according to claim 3, **characterized in that** the powder of inert material is mixed with mineral fibers.

5. The heat insulating system according to claim 4, **characterized in that** said mineral fibers are glass fibers.

6. The heat insulating system according to claim 4, **characterized in that** the inert material is silica.

7. The heat insulating system according to claim 6, **characterized in that** the silica is pyrogenic silica.

## Patentansprüche

1. Wärmeisolationssystem für rohrförmige Bauteile, das mindestens zwei evakuierte Schalen (4, 4') umfasst, die jeweils im Wesentlichen von einer aus Sperrfolien hergestellten evakuierten Hülle gebildet sind, in welcher ein anorganisches oder polymeres diskontinuierliches oder poröses Füllmaterial enthalten ist, und welche um sich selbst soweit gebogen sind, dass zwei ihrer einander gegenüberliegenden Kanten (5, 5'), die parallel zur Biegeachse verlaufen, sich nebeneinander befinden und die zwei anderen Kanten, die quer zur Biegeachse verlaufen, die Abschlusskanten (6, 6') der gebogenen Schalen bilden, wobei die gebogenen evakuierten Schalen (4, 4') coaxial zu den einander gegenüberliegenden Kanten (5) einer evakuierten Schale (4) angeordnet sind, die in Bezug auf die einander gegenüberliegenden Kanten (5') einer weiteren evakuierten Schale (4') versetzt ist, **dadurch gekennzeichnet, dass** mindestens eine der evakuierten Schalen (4, 4') ein polymeres Füllmaterial enthält und für mindestens eine weitere evakuierte Schale (4, 4') ein Pulver aus einem inerten Material mit einer mittleren Teilchengröße von unter 100 Nanometern als Füllmaterial verwendet wird.

2. Wärmeisolationssystem nach Anspruch 1, **dadurch gekennzeichnet, dass** das polymere Füllmaterial ein Polyurethan ist.

3. Wärmeisolationssystem nach Anspruch 1, **dadurch gekennzeichnet, dass** die Teilchengröße des Pulvers aus dem inerten Material etwa 2 bis 20 Nanometer beträgt.

4. Wärmeisolationssystem nach Anspruch 3, **dadurch gekennzeichnet, dass** das Pulver aus dem inerten Material mit Mineralfasern vermischt ist.

5. Wärmeisolationssystem nach Anspruch 4, **dadurch gekennzeichnet, dass** die Mineralfasern Glasfasern sind.

6. Wärmeisolationssystem nach Anspruch 4, **dadurch gekennzeichnet, dass** das inerte Material Kieselsäure ist.

7. Wärmeisolationssystem nach Anspruch 6, **dadurch gekennzeichnet, dass** die Kieselsäure eine pyrogene ist.

## Revendications

1. Système d'isolation thermique destiné à des corps tubulaires, comportant au moins deux panneaux évacués (4, 4'), chacun formé essentiellement par une enveloppe évacuée constituée de feuilles formant barrière, à l'intérieur desquelles est contenu un matériau de remplissage minéral ou polymère, discontinu ou poreux, et roulé sur lui-même jusqu'à ce que deux de ses bords opposés (5, 5') qui sont parallèles à l'axe de roulement soient établis côte à côte, et jusqu'à ce que les deux autres bords qui sont perpendiculaires à l'axe de roulement forment les bords d'extrémité (6, 6') du panneau évacué roulé, lesdits panneaux évacués roulés (4, 4') étant agencés co-axialement avec les bords opposés (5) d'un panneau évacué (4) étagés par rapport aux bords opposés (5') d'un autre panneau évacué (4'), **caractérisé en ce que** au moins un premier desdits panneaux évacués (4, 4') comporte un matériau de remplissage polymère, et au moins un autre panneau évacué (4, 4') utilise comme matériau de remplissage une poudre d'un matériau inerte ayant des dimensions de particules moyennes inférieures à 100 nanomètres.

2. Système d'isolation thermique selon la revendication 1, **caractérisé en ce que** ledit matériau de remplissage polymère est un polyuréthanne.

3. Système d'isolation thermique selon la revendication 1, **caractérisé en ce que** ladite poudre de matériau inerte a des dimensions de particules moyennes comprises entre environ 2 et environ 20 nanomètres.

4. Système d'isolation thermique selon la revendication 3, **caractérisé en ce que** la poudre de matériau inerte est mélangée avec des fibres minérales.

5. Système d'isolation thermique selon la revendication 4, **caractérisé en ce que** lesdites fibres minérales sont des fibres de verre.

6. Système d'isolation thermique selon la revendication 4, **caractérisé en ce que** le matériau inerte est de la silice.

7. Système d'isolation thermique selon la revendication 6, **caractérisé en ce que** la silice est de la silice pyrogénique.
